# EUROPÄISCHE PATENTSCHRIFT

(11) **EP 3 205 014 B1**
(45) Veröffentlichungstag und Bekanntmachung des Hinweises auf die Patenterteilung: **24.07.2019**
(21) Anmeldenummer: 15748060.9
(22) Anmeldetag: 13.08.2015
(51) Int. Cl.: H02P 29/00, H02P 21/14

(54) **STEUERVORRICHTUNG FÜR EINE ELEKTROMASCHINE, FAHRZEUG UND VERFAHREN**
CONTROL DEVICE FOR AN ELECTRIC MACHINE, A VEHICLE, AND A METHOD
DISPOSITIF DE COMMANDE POUR MACHINE ÉLECTRIQUE, VÉHICULE ET PROCÉDÉ CORRESPONDANT

(30) Priorität: 07.10.2014 DE 102014220208
(43) Veröffentlichungstag der Anmeldung: 16.08.2017
(73) Patentinhaber: Robert Bosch GmbH, 70442 Stuttgart (DE)
(72) Erfinder: CHOUK, Lanouar, 71665 Guendelbach (Vaihingen an der Enz) (DE); GOETTING, Gunther, 70499 Stuttgart (DE)
(86) Internationale Anmeldenummer: PCT/EP2015/068626
(87) Internationale Veröffentlichungsnummer: WO 2016/055197

(56) Entgegenhaltungen:
- DE-A1-102010 062 338
- DE-A1-102013 217 424
- JP-A- 2014 131 392
- US-A1- 2006 250 154
- THOMAS WINDISCH ET AL: "Loss minimization of an IPMSM drive using pre-calculated optimized current references", IECON 2011 - 37TH ANNUAL CONFERENCE ON IEEE INDUSTRIAL ELECTRONICS SOCIETY, IEEE, 7. November 2011 (2011-11-07), Seiten 4704-4709, XP032105204, DOI: 10.1109/IECON.2011.6120086 ISBN: 978-1-61284-969-0

## Beschreibung

Die vorliegende Erfindung bezieht sich auf eine Steuervorrichtung für eine Elektromaschine. Ferner bezieht sich die vorliegende Erfindung auf ein Fahrzeug mit einer erfindungsgemäßen Steuervorrichtung und ein Verfahren zum Steuern einer Elektromaschine.

### Technisches Gebiet

In Straßenfahrzeugen werden zunehmend elektrische Maschinen in den Antriebsstrang integriert. Dabei kann die elektrische Maschine entweder zusätzlich zu einem Verbrennungsmotor, wie beim Hybrid- Fahrzeug, oder wie im Elektrofahrzeug als alleiniger Antrieb eingesetzt werden. Diese Anwendung stellt hohe Anforderungen an die verfügbare Dauer- und Spitzenleistung sowie an den Wirkungsgrad des elektrischen Antriebs.

Der elektrische Antrieb wird dabei im Allgemeinen im Drehmomenten-Regelmodus betrieben, d.h. die Fahrzeugsteuerung gibt einen Sollwert für das Drehmoment vor, welches von der elektrischen Maschine gestellt werden soll. Dieses kann sowohl motorisch, also antreibend, als auch generatorisch, also bremsend, sein.

Bei einer solchen herkömmlichen Regelung wird das geforderte Sollmoment betriebspunktabhängig in ein zugehöriges Sollwertepaar für die Komponenten des Statorstroms in einem feldorientierten Koordinatensystem umgewandelt. Diese Stromsollwerte werden dann über eine Stromregelung, welche die erforderlichen Statorspannungen berechnet, geregelt.

Zur Koordinatentransformation der gemessenen Phasenströme einerseits und der gestellten Reglerspannungen andererseits wird zusätzlich der Winkel des Rotorfeldes benötigt, welcher z.B. bei der Permanentmagnet-Synchronmaschine (PMSM) in der Regel über eine Messung des Rotorwinkels gewonnen wird.

Die Berechnung der Sollstromkomponenten erfolgt üblicherweise nach folgenden Kriterien:
- Minimierung der Gesamtverluste des elektrischen Antriebs
- Minimierung der Inverterverluste
- Minimierung der Maschinenverluste

Da die Höhe des Statorstroms sowohl bei den Inverter- als auch bei den Maschinenverlusten ein dominanter Einflussfaktor ist (z.B. quadratische Abhängigkeit bei ohmschen Verlusten), werden die Sollstromkomponenten so ausgewählt, dass ein erfordertes Drehmoment mit einem minimalen Strombetrag. eingestellt wird. So werden im sogenannten Grunddrehzahlbereich Betriebspunkte auf der MTPC-Kennlinie (MTPC: maximum torque per current) angenähert und im Feldschwächbereich die maximal verfügbare Statorspannung ausgenutzt, um den erforderlichen Feldschwächstrom zu minimieren.

Die DE 10 2013 217 444 A1 zeigt ein beispielhaftes Verfahren zum Steuern eines Elektromotors.

US 2006/250154 A1 offenbart einen Elektromotor mit einem Überlastschutz. Basierend auf der aktuellen Winkelgeschwindigkeit des Motors sowie Schätzwerten von weiteren Motorparametern können Rotortemperatur und Statortemperatur geschätzt werden. Diese Schätzwerte können in eine Diagnose für eine Überlast einbezogen werden.

Die Druckschrift "Loss minimization of an IPMSM drive using pre-calculated optimized current references" (Windisch, Th. et al, IECON 2011 - 37th annual conference on IEEE Industrial Electronics Society, 7. November 2011, DOI 10.1109/IECON.2011.6120086, ISBN 978-1-61284-969-0) offenbart, dass Parameter, wie eine magnetische Sättigung und eine Temperaturverteilung, wesentliche Parameter einer Synchronmaschine beeinflussen können.

### Offenbarung der Erfindung

Die vorliegende Erfindung offenbart eine Steuervorrichtung mit den Merkmalen des Patentanspruchs 1, ein Fahrzeug mit den Merkmalen des Patentanspruchs 10 und ein Verfahren mit den Merkmalen des Patentanspruchs 13.

### Demgemäß ist vorgesehen:

Eine Steuervorrichtung für eine Elektromaschine mit einem Stator und einem Rotor, mit einer Temperaturerfassungsvorrichtung, welche ausgebildet ist, die Temperatur des Stators und die Temperatur des Rotors zu erfassen, und mit einer Recheneinrichtung, welche ausgebildet ist, den Arbeitspunkt der Elektromaschine basierend auf einer Drehmomentvorgabe und der erfassten Temperatur des Stators und der erfassten Temperatur des Rotors und einer vorgegebenen Verteilung für die thermischen Belastung des Stators und des Rotors einzustellen.

### Ferner ist vorgesehen:

Ein Fahrzeug mit einer Elektromaschine, welche einen Stator und einen Rotor aufweist, und mit einer erfindungsgemäßen Steuervorrichtung, welche mit der Elektromaschine gekoppelt ist und ausgebildet ist, die Elektromaschine zu steuern.

### Schließlich ist vorgesehen:

Ein Verfahren zum Steuern einer Elektromaschine mit einem Stator und einem Rotor, aufweisend Erfassen einer Temperatur des Stators und einer Temperatur des Rotors, und Einstellen eines Arbeitspunkts der Elektromaschine basierend auf einer Drehmomentvorgabe und der erfassten Temperatur des Stators und der erfassten Temperatur des Rotors und einer vorgegebenen Verteilung für die thermischen Belastung des Stators und des Rotors.

### Vorteile der Erfindung

Die der vorliegenden Erfindung zu Grunde liegende Erkenntnis besteht darin, dass der Betrieb mit minimalem Statorstrom, wie er heute üblich ist, in der Regel zu einer Minimierung der Gesamtverluste führt. Allerdings kann es aufgrund der Verlustverteilung in der elektrischen Maschine und der unterschiedlichen Kühlanbindung von Rotor und Stator dabei zu ungünstigen Temperaturverteilungen in der Maschine kommen.

Dies führt dazu, dass sich Rotor und Stator beim Betrieb der Maschine je nach Belastung unterschiedlich schnell erwärmen bzw. abkühlen. Dadurch wird z.B. im Fahrbetrieb bei einem Elektrofahrzeug oder einem Hybridfahrzeug die verfügbare Maximalleistung durch die Komponente begrenzt, welche als erstes die zulässige Maximaltemperatur erreicht. Während im Grunddrehzahlbereich in der Regel der Stator als erstes seine Grenztemperatur annimmt, erreicht im Feldschwächbereich meist die Rotortemperatur zuerst die Maximalgrenze.

Dabei führt eine erhöhte Rotortemperatur aufgrund der schlechteren Kühlanbindung des Rotors zu einer längeren Abkühlphase bei der die verfügbare Maschinenleistung reduziert werden muss und z.B. im Hybrid- oder Elektrofahrzeug nur eine entsprechend kleinere Antriebsleistung zur Verfügung steht. Im Hybridfahrzeug ergibt sich darüber hinaus eine geänderte Momentenaufteilung zwischen Verbrennungsmotor und elektrischer Maschine, welche zu ungünstigeren Gesamtverlusten und damit letztlich zu einem schlechteren Zykluswirkungsgrad führen kann.

Die der vorliegenden Erfindung zu Grunde liegende Idee besteht nun darin, dieser Erkenntnis Rechnung zu tragen und eine Möglichkeit vorzusehen, die Verluste innerhalb der elektrischen Maschine durch eine geänderte Strategie zur Vorgabe der arbeitsspunktabhängigen Stromzeiger so zwischen Rotor und Stator zu verschieben, dass die thermische Belastung des Rotors und des Stators der Elektromaschine je nach Anwendung angepasst werden kann und z.B. der elektrische Antrieb eines Hybridfahrzeugs über den gesamten Fahrzyklus gesehen optimal genutzt werden kann.

Dazu sieht die vorliegende Erfindung vor, dass in der Steuervorrichtung eine Recheneinrichtung einen Arbeitspunkt für die Elektromaschine einstellt. Dabei stellt die Recheneinrichtung den Arbeitspunkt basierend auf einer Drehmomentvorgabe und den Temperaturen des Rotors und des Stators der Elektromaschine ein. Ferner ist eine Verteilung für die thermische Belastung des Stators und des Rotors vorgegeben.

Unter der Temperatur des Rotors und der Temperatur des Stators sind nicht nur die absoluten Temperaturen zu verstehen. Vielmehr kann eine Berechnung, die auf den genannten Temperaturen basiert, auch auf einer zeitlichen Temperaturänderung bzw. einem Temperaturgradient oder dergleichen basieren.

Die Verteilung der thermischen Belastung kann qualitativ aussagen, dass in einem bestimmten Betriebsmodus der Elektromaschine z.B. der Rotor thermisch weniger belastet werden soll, als der Stator. Die vorgegebene Verteilung kann aber auch quantitative aussagen aufweisen, welche z.B. eine prozentuale Verteilung der thermischen Belastung zwischen Stator und Rotor der Elektromaschine angeben.

Werden bei der Berechnung des Arbeitspunktes der Elektromaschine zusätzlich die Temperaturen des Stators und des Rotors berücksichtigt, können die Ströme in der Elektromaschine derart gestellt werden, dass sich entweder der Stator oder der Rotor mehr erwärmt. So kann die thermische Belastung von Rotor und Stator an unterschiedliche Lastfälle oder Einsatzfälle angepasst werden. Dies wird im Zusammenhang mit den Figuren näher erläutert.

Durch die oben beschriebenen Merkmale der vorliegenden Erfindung wird die Zeit bis zum Erreichen der zulässigen Maximaltemperatur der Elektromaschine verlängert oder die Abkühlphase der Elektromaschine verkürzt.

Ferner steigt z.B. in Hybridfahrzeugen die mittlere im Fahrzyklus verfügbare elektrische Leistung und damit die Performance des elektrischen Antriebs an.

Schließlich führt z.B. in Hybridfahrzeugen die höhere Verfügbarkeit des elektrischen Antriebs zu einem erhöhten Optimierungspotential der Momentenverteilung zwischen Verbrennungsmotor und Elektromaschine und damit zu einer Minimierung des zyklusspezifischen Gesamtenergiebedarfs des Hybridfahrzeugs.

Vorteilhafte Ausführungsformen und Weiterbildungen ergeben sich aus den Unteransprüchen sowie aus der Beschreibung unter Bezugnahme auf die Figuren.

In einer Ausführungsform ist die Recheneinrichtung ausgebildet, den Arbeitspunkt durch Berechnen einer d-Achsenkomponente eines Stromvektors und einer q-Achsenkomponente des Stromvektors in einem feldorientierten Koordinatensystem einzustellen. Dies vereinfacht die Berechnung der Motorsollströme.

In einer Ausführungsform weist die Steuervorrichtung einen Speicher auf, welcher ausgebildet ist, für die Elektromaschine ein maschinenspezifisches Kennlinienfeld zu speichern, welches für vorgegebene Werte der d-Achsenkomponente und der q-Achsenkomponente des Stromvektors das resultierende Drehmoment und insbesondere den resultierenden Motorstrom und/oder den resultierenden magnetischen Fluss in der Elektromaschine angibt. Dies ermöglicht eine Auswahl geeigneter d-Achsenkomponenten und der q-Achsenkomponenten des Stromvektors für unterschiedliche Anwendungsfälle.

In einer Ausführungsform ist die Recheneinrichtung ausgebildet, insbesondere basierend auf dem Kennlinienfeld, die d-Achsenkomponente des Stromvektors gegenüber der q-Achsenkomponente des Stromvektors zu vergrößern und/oder zu verkleinern und die q-Achsenkomponente des Stromvektors derart anzupassen, dass sich in der Elektromaschine das durch die Drehmomentvorgabe vorgegebene Drehmoment einstellt, wenn die thermische Belastung des Rotors gegenüber der thermischen Belastung des Stators verringert werden soll.

In einer Ausführungsform ist die Elektromaschine als permanenterregte Synchronmaschine ausgeführt und die Recheneinrichtung ist ausgebildet, die d-Achsenkomponente des Stromvektors, insbesondere basierend auf dem Kennlinienfeld, gegenüber der q-Achsenkomponente des Stromvektors in dem Kennlinienfeld zu vergrößern und/oder die q-Achsenkomponente des Stromvektors gegenüber der d-Achsenkomponente des Stromvektors zu verringern, wenn die thermische Belastung des Rotors gegenüber der thermischen Belastung des Stators verringert werden soll. Eine Verschiebung des Arbeitspunktes hin zu einer betragsmäßig größeren d-Achsenkomponente des Statorstroms führt zu einer zu einer Reduktion des im Rotor wirksamen Gesamtfeldes und damit zu einer Verkleinerung der Rotorverluste und schließlich zu einem reduzierten Wärmeeintrag im Rotor.

In einer Ausführungsform ist die Recheneinrichtung ausgebildet, die d-Achsenkomponente des Stromvektors, insbesondere basierend auf dem Kennlinienfeld, zu vergrößern und die q-Achsenkomponente des Stromvektors zu verringern, sodass der resultierende Stromvektor auf einer Kennlinie gleichbleibenden Drehmoments verschoben wird. Dies ermöglicht eine Reduktion des Wärmeeintrags in den Rotor bei gleichbleibendem Drehmoment.

In einer Ausführungsform ist die Recheneinrichtung ausgebildet, den Betrag des Stromvektors zu verringern, wenn die thermische Belastung des Stators verringert werden soll. Dies ermöglicht eine Abkühlung des Stators und des Rotors.

In einer Ausführungsform ist die Recheneinrichtung ausgebildet, den Arbeitspunkt ferner basierend auf einer Zwischenkreisspannung der Steuervorrichtung und/oder einer Statorfrequenz zu berechnen. Dies ermöglicht eine einfache Berechnung des Arbeitspunkts.

In einer Ausführungsform ist die Temperaturerfassungsvorrichtung ausgebildet, die Temperatur des Stators und/oder die Temperatur des Rotors, insbesondere modellbasiert, zu berechnen. Dies ermöglicht einen vereinfachten Aufbau der Steuervorrichtung.

In einer Ausführungsform weist die die Temperaturerfassungsvorrichtung zumindest einen Temperatursensor zur Erfassung der Temperatur des Stators und/oder der Temperatur des Rotors auf. Dies ermöglicht eine exakte Erfassung der relevanten Temperaturen.

In einer Ausführungsform weist die Steuervorrichtung einen Stromregler auf, welcher mit der Recheneinrichtung gekoppelt ist und ausgebildet ist, basierend auf dem von der Recheneinrichtung eingestellten Arbeitspunkt Steuerspannungen für die Phasen der Elektromaschine zu berechnen. Dies ermöglicht eine einfache Ansteuerung der Elektromaschine basierend auf dem eingestellten Arbeitspunkt.

In einer Ausführungsform ist die Elektromaschine mit einem Antriebsstrang des Fahrzeugs gekoppelt und ist ausgebildet, das Fahrzeug anzutreiben. Dies ermöglicht es, das Fahrzeug als reines Elektrofahrzeug zu betreiben.

In einer Ausführungsform weist das Fahrzeug einen Verbrennungsmotor auf, welcher mechanisch mit dem Antriebsstrang gekoppelt ist und ausgebildet ist, das Fahrzeug alleine oder in Verbindung mit der Elektromaschine anzutreiben. Dadurch kann die vorliegende Erfindung z.B. in Hybridfahrzeugen eingesetzt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Steuervorrichtung;
- Fig. 2: ein Blockschaltbild einer Ausführungsform eines erfindungsgemäßen Fahrzeugs;
- Fig. 3: ein Ablaufdiagramm einer Ausführungsform eines erfindungsgemäßen Verfahrens; und
- Fig. 4: ein Diagramm der d-Achsenkomponente und der q-Achsenkomponente zur Veranschaulichung der vorliegenden Erfindung.

In allen Figuren sind gleiche bzw. funktionsgleiche Elemente und Vorrichtungen - sofern nichts Anderes angegeben ist - mit denselben Bezugszeichen versehen worden.

### Ausführungsformen der Erfindung

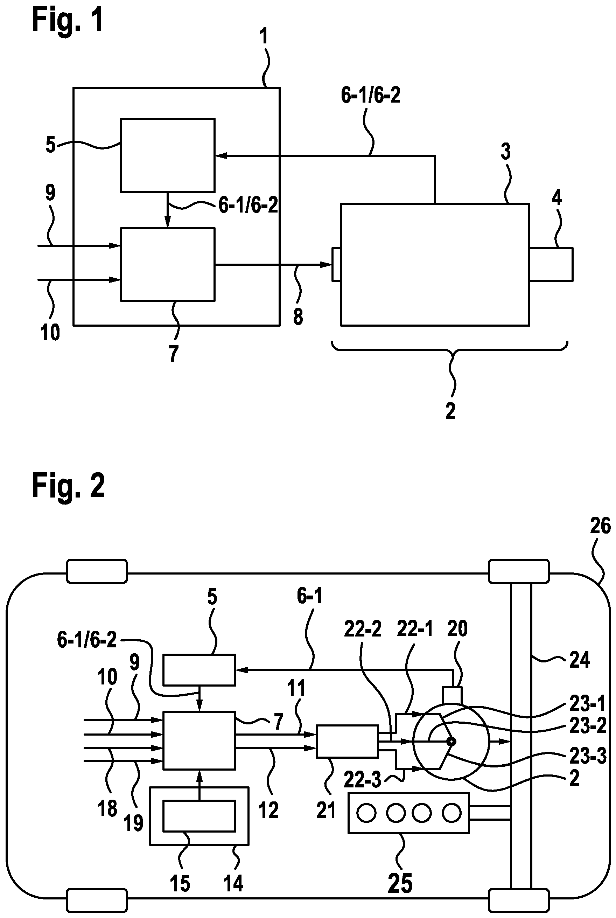

Fig. 1 zeigt ein Blockschaltbild einer Ausführungsform einer erfindungsgemäßen Steuervorrichtung 1. Ferner ist in Fig. 1 eine Elektromaschine 2 dargestellt, die einen Stator 3 und einen Rotor 4 aufweist.

Die Steuervorrichtung 1 der Fig. 1 weist eine Temperaturerfassungsvorrichtung 5 auf, die mit der Elektromaschine 2 gekoppelt ist, um die Temperatur 6-1 des Stators 3 und die Temperatur 6-2 des Rotors 4 zu erfassen und einer Recheneinrichtung 7 weiterzuleiten.

Die Recheneinrichtung 7 berechnet für die Elektromaschine 2 einen Arbeitspunkt 8, der zur Ansteuerung der Elektromaschine 2 genutzt wird. Den Arbeitspunkt 8 berechnet die Recheneinrichtung 7 dabei basierend auf der Temperatur 6-1 des Stators 3 und der Temperatur 6-2 des Rotors 4 sowie basierend auf einer Drehmomentvorgabe 9 und einer vorgegebenen Verteilung 10 für die thermischen Belastung des Stators 3 und des Rotors 4.

Die vorgegebene Verteilung 10 für die thermischen Belastung des Stators 3 und des Rotors 4 kann dabei qualitativ vorgeben, dass z.B. der Stator 3 stärker thermisch belastet werden soll, als der Rotor 4 oder umgekehrt. Alternativ kann die vorgegebene Verteilung 10 für die thermische Belastung des Stators 3 und des Rotors 4 auch quantitativ ein konkretes Verteilungsverhältnis oder einen Bereich für ein Verteilungsverhältnis angeben.

Die Recheneinrichtung 7 kann den Arbeitspunkt 8 z.B. berechnen, indem sie eine d-Achsenkomponente 11 eines Stromvektors 13-1 - 13-3 und eine q-Achsenkomponente 12 des Stromvektors 13-1 - 13-3 in einem feldorientierten Koordinatensystem berechnet. Das feldorientierte Koordinatensystem ist dabei fest gegenüber dem Rotor 4 und dreht sich folglich mit diesem mit.

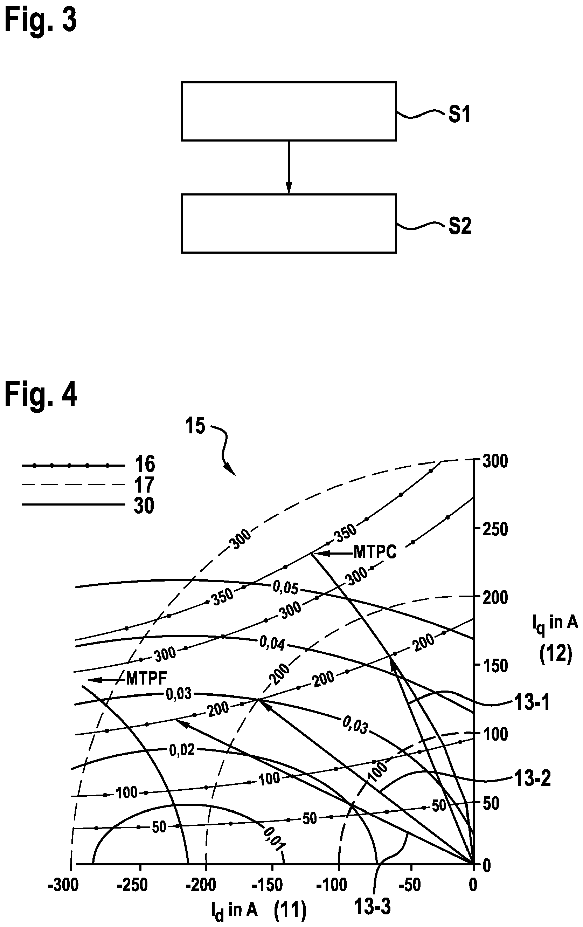

Die vorliegende Erfindung macht sich dabei zu Nutze, dass eine Verschiebung des Arbeitspunkts 8 hin zu einer Betragsmäßig größeren d-Achsenkomponente 11 des Statorstroms zu einer Reduktion des im Rotor 4 wirksamen Gesamtfeldes und damit zu einer Verkleinerung der Rotorverlust führt. Dies führt dazu, dass der Betrag des Gesamtstroms ansteigt und die Verluste im Stator 3 ebenfalls ansteigen. Auf Grund einer normalerweise besseren Kühlanbindung des Stators 3 kann die Erwärmung des Stators 3 aber besser kontrolliert werden, als die Erwärmung des Rotors 4. Diese Zusammenhänge werden in Verbindung mit Fig. 4 im Detail erklärt.

In Fig. 1 nicht dargestellt sind diejenigen Komponenten einer Elektromaschinen-Steuervorrichtung, die nicht der Erklärung bedürfen und als selbstverständlich angenommen werden können. So zeigt die Fig. 1 z.B. den Stromregler und den Wechselrichter nicht, die basierend auf der Vorgabe der Recheneinrichtung 7 die Steuerspannungen für die Elektromaschine erzeugen.

Fig. 2 zeigt ein Blockschaltbild einer Ausführungsform eines erfindungsgemäßen Fahrzeugs 26 mit einer Elektromaschine 2, einem Verbrennungsmotor 25 und mit einer erfindungsgemäßen Steuervorrichtung 1. Dabei ist die Steuervorrichtung 1 nicht separat eingezeichnet, vielmehr sind die Komponenten der Steuervorrichtung 1 dargestellt.

Die Elektromaschine 2 und der Verbrennungsmotor 25 sind jeweils mit einem Antriebsstrang 24 des Fahrzeugs 26 gekoppelt, über welchen das Fahrzeug 26 angetrieben wird.

Die Steuervorrichtung 1 der Fig. 2 unterscheidet sich von der Steuervorrichtung 1 der Fig. 1 dahingehend, dass ein Temperatursensor 20 vorgesehen ist, der an dem Stator 3 der Elektromaschine 2 angebracht ist und der Temperaturerfassungsvorrichtung 5 die Temperatur des Stators 6-1 bereitstellt. Die Temperaturerfassungsvorrichtung 5 ist dazu ausgebildet, die Temperatur 6-2 des Rotors 4 modellbasiert aus der Temperatur 6-1 des Stators 3 zu berechnen und beide Temperaturen 6-1, 6-2 der Recheneinrichtung 7 bereitzustellen. Alternativ kann ein zweiter Temperatursensor vorgesehen sein, der die Temperatur 6-2 des Rotors 4 erfasst und der Temperaturerfassungsvorrichtung 5 bereitstellt.

Ferner ist ein Speicher 14 vorgesehen, in welchem ein Kennlinienfeld 15, insbesondere ein maschinenspezifisches Kennlinienfeld 15, zu der Elektromaschine 2 abgelegt ist und der Recheneinrichtung 7 bereitgestellt wird. Das Kennlinienfeld 15 wird in Fig. 4 näher erläutert.

Das Kennlinienfeld 15 gibt für vorgegebene Werte der d-Achsenkomponente 11 und der q-Achsenkomponente 12 des Stromvektors 13-1 - 13-3 das resultierende Drehmoment 17 an. In einer Ausführungsform kann das Kennlinienfeld 15 zusätzlich den resultierenden Motorstrom 16 und/oder den resultierenden magnetischen Fluss 30 in der Elektromaschine 2 angeben. Aus dem Kennlinienfeld kann also z.B. für ein vorgegebenes Drehmoment 17 der entsprechende Stromvektor 13-1 - 13-3 abgeleitet werden. Dabei können die d-Achsenkomponente 11 und der q-Achsenkomponente 12 des Stromvektors 13-1 - 13-3 derart gewählt werden, dass sich eine Verteilung der d-Achsenkomponente 11 und der q-Achsenkomponente 12 ergibt, die der vorgegebenen Verteilung 10 für die thermischen Belastung des Stators 3 und des Rotors 4 entspricht.

Insbesondere kann z.B. eine d-Achsenkomponente 11 des Stromvektors 13-1 - 13-3 bestimmt werden, die gegenüber der q-Achsenkomponente 12 des Stromvektors 13-1 - 13-3 vergrößert ist, um die thermische Belastung des Rotors 4 gegenüber der thermischen Belastung des Stators 3 zu verringern. Soll auch die thermische Belastung des Stators 3 verringert werden, kann der Betrag des Stromvektors 13-1 - 13-3 verringert werden.

Allgemein kann die Recheneinrichtung 7 ausgebildet sein basierend auf dem Kennlinienfeld 15, die d-Achsenkomponente 11 des Stromvektors 13-1 - 13-3 gegenüber der q-Achsenkomponente 12 des Stromvektors 13-1 - 13-3 zu verändern und die q-Achsenkomponente 12 entsprechend anzupassen, sodass sich in der Elektromaschine 2 das durch die Drehmomentvorgabe 9 vorgegebene Drehmoment einstellt. Dabei kann die Recheneinrichtung 7 z.B. die d-Achsenkomponente 11 vergrößern und die q-Achsenkomponente 12 verkleinern oder umgekehrt. Die konkrete Anpassung hängt dabei von dem Kennlinienfeld 15 der jeweiligen Elektromaschine 2 ab.

In Fig. 2 ist die Recheneinrichtung 7 ausgebildet, den Arbeitspunkt 8, also die d-Achsenkomponente 11 und die q-Achsenkomponente 12 des Stromvektors 13-1 - 13-3 basierend auf der Temperatur des Stators 6-1 und der Temperatur 6-2 des Rotors 4 sowie der Drehmomentvorgabe 9, der vorgegebenen Verteilung 10 für die thermischen Belastung des Stators 3 und des Rotors 4, einer Zwischenkreisspannung 18 eines (nicht dargestellten) Zwischenkreises der Steuervorrichtung 1 und einer Statorfrequenz 19, welche angibt, welche Frequenz die Steuerspannung des Stators 3 aufweist, zu berechnen.

Die von der Recheneinrichtung 7 berechnete d-Achsenkomponente 11 und die q-Achsenkomponente 12 werden einem Stromregler 21 zugeführt, der Steuerspannungen 22-1 - 22-3 für die Phasen 23-1 - 23-3 des Stators 3 derart erzeugt, dass sich die gewünschten Ströme in der q-Achse und der d-Achse einstellen.

Fig. 3 zeigt ein Ablaufdiagramm einer Ausführungsform eines erfindungsgemäßen Verfahrens zum Steuern einer Elektromaschine 2 mit einem Stator 3 und einem Rotor 4.

Das Verfahren sieht das Erfassen S1 der Temperatur 6-1 des Stators 3 und der Temperatur 6-2 des Rotors 4 der Elektromaschine 2 vor. Basierend auf der erfassten Temperatur 6-1 des Stators 3 und der erfassten Temperatur 6-2 des Rotors 4 sowie einer Drehmomentvorgabe 9 und einer vorgegebenen Verteilung 10 für die thermischen Belastung des Stators 3 und des Rotors 4 wird ein Arbeitspunkt 8 der Elektromaschine 2 eingestellt.

Das Einstellen des Arbeitspunkts 8 erfolgt in einer Ausführungsform durch Berechnen einer d-Achsenkomponente 11 eines Stromvektors 13-1 - 13-3 und einer q-Achsenkomponente 12 des Stromvektors 13-1 - 13-3 in einem feldorientierten Koordinatensystem. Insbesondere können z.B. in einer Ausführungsform die d-Achsenkomponente 11 des Stromvektors 13-1 - 13-3 und die q-Achsenkomponente 12 des Stromvektors 13-1 - 13-3 gegeneinander verschoben bzw. betragsmäßig angepasst werden, sodass sich die vorgegebene Verteilung 10 für die thermischen Belastung des Stators 3 und des Rotors 4 ergibt.

Dazu kann ein Kennlinienfeld 15 vorgesehen sein, welches für vorgegebene Werte der d-Achsenkomponente 11 und der q-Achsenkomponente 12 des Stromvektors 13-1 - 13-3 das resultierende Drehmoment 17 angibt. In einer Ausführung kann das Kennlinienfeld 15 auch den resultierenden Motorstrom 16 und/oder den resultierenden magnetischen Fluss 30 in der Elektromaschine 2 angeben.

Beispielsweise kann die d-Achsenkomponente 11 gegenüber der q-Achsenkomponente 12 vergrößert werden, wenn die thermische Belastung des Rotors 4 gegenüber der thermischen Belastung des Stators 3 verringert werden soll. Alternativ kann auch die q-Achsenkomponente 12 des Stromvektors 13-1 - 13-3 gegenüber der d-Achsenkomponente 11 des Stromvektors 13-1 - 13-3 in dem Kennlinienfeld 15 verringert werden.

In einer Ausführungsform können die d-Achsenkomponente 11 und die q-Achsenkomponente 12 derart angepasst werden, dass der resultierende Stromvektor 13-1 - 13-3 in dem Kennlinienfeld 15 auf einer Kennlinie gleichbleibenden Drehmoments 17 verschoben wird.

Beim Einstellen kann in einer Ausführungsform der Betrag des Stromvektors 13-1 - 13-3 in dem Kennlinienfeld 15 verringert werden, wenn die thermische Belastung des Stators 3 verringert werden soll.

Fig. 4 zeigt ein Diagramm der d-Achsenkomponente 11 und der q-Achsenkomponente 12 zur Veranschaulichung der vorliegenden Erfindung.

Die Abszissenachse des Diagramms zeigt die d-Achsenkomponente 11 des Statorstroms für Ströme von 0A bis -300A. Die Ordinatenachse des Diagramms zeigt die q-Achsenkomponente 12 des Statorstroms für Ströme von 0A bis 300A. In dem Diagramm sind Bogenförmig ausgehend von dem Ursprung des Diagramms die Linien gleichen Motorstroms 16 eingezeichnet. Ferner sind Linien gleichen Drehmoments 17 in dem Diagramm eingezeichnet, die beginnend bei -300A d-Achsenkomponente 11 leicht ansteigend bis zu 0A d-Achsenkomponente 11 verlaufen. Schließlich sind in dem Diagramm auch Ellipsenförmig verlaufende Linien für den magnetischen Fluss 30 dargestellt, die Ihren Ursprung auf der Abszissenachse bei ca. -220A haben.

In Fig. 4 sind drei Stromvektoren 13-1 - 13-3 eingezeichnet, deren Ende jeweils auf der Linie für ein Drehmoment von 200Nm liegt. Dabei hat der erste Stromvektor 13-1 eine d-Achsenkomponente 11 von ca. -50A und eine q-Achsenkomponente 12 von ca. 150A. Der zweite Stromvektor 13-2 hat eine d-Achsenkomponente 11 von ca. -150A und eine q-Achsenkomponente 12 von ca. 125A. Der dritte Stromvektor 13-3 hat eine d-Achsenkomponente 11 von ca. -220A und eine q-Achsenkomponente 12 von ca. 110A.

Die drei Stromvektoren 13-1 - 13-3 verdeutlichen, wie eine Verschiebung der d-Achsenkomponente 11 und der q-Achsenkomponente 12 bei einem gleichbleibenden Drehmoment 17 durchgeführt werden kann. Somit wird es möglich, für eine jeweilige Drehmomentvorgabe 9 unterschiedliche Stromvektoren 13-1 - 13-3 zu stellen und somit die Verteilung der Verlustleistung zwischen Stator 3 und Rotor 4 zu beeinflussen.

Für das vorgegebene Drehmoment von 200Nm stellt der Stromvektor 13-1 den Stromminimalen Arbeitspunkt 8 für den Grunddrehzahlbereich dar. Der Stromvektor 13-2 stellt den Stromminimalen Arbeitspunkt 8 für den Feldschwächebtrieb dar. Der Stromvektor 13-3 stellt einen Arbeitspunkt 8 dar, bei welchem die d-Achsenkomponente 11 vergrößert und die q-Achsenkomponente 12 verkleinert wurde, so dass die Verlustleistung in dem Stator 3 erhöht und in dem Rotor 4 verringert wird.

In dem Arbeitspunkt 8, der dem dritten Stromvektor 13-3 korrespondiert, ist der Gesamtbetrag, also die Länge, des Stromvektors 13-3 größer, als die, der anderen Stromvektoren 13-1 und 13-2.

Allerdings ist bei Elektromaschinen üblicherweise der Rotor 4 das begrenzende Bauteil, da dieser als erstes die maximal zulässige Temperatur erreicht. Folglich kann die Verfügbarkeit der Elektromaschine 2 erhöht werden, wenn der Wärmeeintrag in den Rotor 4 verringert wird, auch, wenn dadurch der Wärmeeintrag in den Stator erhöht wird.

Es versteht sich, dass das Diagramm der Fig. 4 lediglich als Beispiel zur Erläuterung der vorliegenden Erfindung dient. In weiteren Ausführungsformen kann, wie oben bereits dargestellt, basierend auf dem Kennlinienfeld 15, die d-Achsenkomponente 11 des Stromvektors 13-1 - 13-3 gegenüber der q-Achsenkomponente 12 des Stromvektors 13-1 - 13-3 verändert werden und die q-Achsenkomponente 12 entsprechend angepasst werden. Beispielsweise kann die d-Achsenkomponente 11 vergrößert und die q-Achsenkomponente 12 verkleinert werden oder umgekehrt. Die konkrete Anpassung hängt dabei von der jeweiligen Elektromaschine 2 und dem entsprechenden Kennlinienfeld 15 ab.

Beispielsweise kann in jedem Ausführungsbeispiel, welches im Rahmen dieser Patentanmeldung dargestellt wurde, das Kennlinienfeld 15 durch entsprechende Berechnungen ersetzt werden.

Anstelle des Speichers 14 können also in der Recheneinrichtung 7 die der jeweiligen Elektromaschine 2 entsprechenden Formeln hinterlegt sein, welche eine Berechnung des jeweiligen Arbeitspunktes 8 ermöglichen.

## Patentansprüche

1. Steuervorrichtung (1) für eine Elektromaschine (2) mit einem Stator (3) und einem Rotor (4), mit
einer Temperaturerfassungsvorrichtung (5), welche ausgebildet ist, die Temperatur (6-1) des Stators (3) und die Temperatur (6-2) des Rotors (4) zu erfassen; **gekennzeichnet durch** eine Recheneinrichtung (7), welche ausgebildet ist, den Arbeitspunkt (8) der Elektromaschine (2) basierend auf einer Drehmomentvorgabe (9) und der erfassten Temperatur (6-1) des Stators (3) und der erfassten Temperatur (6-2) des Rotors (4) und einer vorgegebenen Verteilung (10) für die thermische Belastung des Stators (3) und des Rotors (4) einzustellen.

2. Steuervorrichtung nach Anspruch 1,
wobei die Recheneinrichtung (7) ausgebildet ist, den Arbeitspunkt (8) durch Berechnen einer d-Achsenkomponente (11) eines Stromvektors (13-1 - 13-3) und einer q-Achsenkomponente (12) des Stromvektors (13-1 - 13-3) in einem feldorientierten Koordinatensystem einzustellen.

3. Steuervorrichtung Anspruch 2,
mit einem Speicher (14), welcher ausgebildet ist, für die Elektromaschine (2) ein maschinenspezifisches Kennlinienfeld (15) zu speichern, welches für vorgegebene Werte der d-Achsenkomponente (11) und der q-Achsenkomponente (12) des Stromvektors (13-1 - 13-3) den resultierenden Motorstrom (16) und das resultierende Drehmoment (17) und den resultierenden magnetischen Fluss (30) in der Elektromaschine (2) angibt.

4. Steuervorrichtung nach einem der Ansprüche 2 und 3,
wobei die Recheneinrichtung (7) ausgebildet ist, insbesondere basierend auf dem Kennlinienfeld (15), die d-Achsenkomponente (11) des Stromvektors (13-1 - 13-3) gegenüber der q-Achsenkomponente (12) des Stromvektors (13-1 - 13-3) zu vergrößern und/oder zu verkleinern und die q-Achsenkomponente (12) des Stromvektors (13-1 - 13-3) derart anzupassen, dass sich in der Elektromaschine (2) das durch die Drehmomentvorgabe (9) vorgegebene Drehmoment einstellt, wenn die thermische Belastung des Rotors (4) gegenüber der thermischen Belastung des Stators (3) verringert werden soll;
wobei die Recheneinrichtung (7), insbesondere wenn die Elektromaschine (2) als permanenterregte Synchronmaschine (7) ausgeführt ist, ausgebildet ist, die d-Achsenkomponente (11) des Stromvektors (13-1 - 13-3), insbesondere basierend auf dem Kennlinienfeld (15), gegenüber der q-Achsenkomponente (12) des Stromvektors (13-1 - 13-3) zu vergrößern und/oder die q-Achsenkomponente (12) des Stromvektors (13-1 - 13-3), insbesondere basierend auf dem Kennlinienfeld (15), gegenüber der d-Achsenkomponente (11) des Stromvektors (13-1 - 13-3) zu verringern, wenn die thermische Belastung des Rotors (4) gegenüber der thermischen Belastung des Stators (3) verringert werden soll.

5. Steuervorrichtung nach Anspruch 4,
wobei die Recheneinrichtung (7) ausgebildet ist, die d-Achsenkomponente (11) des Stromvektors (13-1 - 13-3), insbesondere basierend auf dem Kennlinienfeld (15), zu vergrößern und die q-Achsenkomponente (12) des Stromvektors (13-1 - 13-3) zu verringern, sodass der resultierende Stromvektor (13-1 - 13-3) auf einer Kennlinie gleichbleibenden Drehmoments (17) verschoben wird.

6. Steuervorrichtung nach einem der vorherigen Ansprüche 2 bis 5,
wobei die Recheneinrichtung (7) ausgebildet ist, den Betrag des Stromvektors (13-1 - 13-3) zu verringern, wenn die thermische Belastung des Stators (3) verringert werden soll.

7. Steuervorrichtung nach einem der vorherigen Ansprüche 1 bis 6,
wobei die Recheneinrichtung (7) ausgebildet ist, den Arbeitspunkt (8) ferner basierend auf einer Zwischenkreisspannung (18) der Steuervorrichtung (1) und/oder einer Statorfrequenz (19) zu berechnen.

8. Steuervorrichtung nach einem der vorherigen Ansprüche,
wobei die Temperaturerfassungsvorrichtung (5) ausgebildet ist, die Temperatur (6-1) des Stators (3) und/oder die Temperatur (6-2) des Rotors (4), insbesondere modellbasiert, zu berechnen; und/oder
wobei die Temperaturerfassungsvorrichtung (5) zumindest einen Temperatursensor (20) zur Erfassung der Temperatur (6-1) des Stators (3) und/oder der Temperatur (6-2) des Rotors (4) aufweist.

9. Steuervorrichtung nach einem der vorherigen Ansprüche,
mit einem Stromregler (21), welcher mit der Recheneinrichtung (7) gekoppelt ist und ausgebildet ist, basierend auf dem von der Recheneinrichtung (7) eingestellten Arbeitspunkt (8) Steuerspannungen (22-1 - 22-3) für die Phasen (23-1 - 23-3) der Elektromaschine (2) zu berechnen.

10. Fahrzeug (26)
mit einer Elektromaschine (2), welche einen Stator (3) und einen Rotor (4) aufweist; und
mit einer Steuervorrichtung (1) nach einem der vorherigen Ansprüche, welche mit der Elektromaschine (2) gekoppelt ist und ausgebildet ist, die Elektromaschine (2) zu steuern.

11. Fahrzeug nach Anspruch 10,
wobei die Elektromaschine (2) mit einem Antriebsstrang (24) des Fahrzeugs (26) gekoppelt ist und ausgebildet ist, das Fahrzeug (26) anzutreiben.

12. Fahrzeug nach Anspruch 11,
mit einem Verbrennungsmotor (25), welcher mechanisch mit dem Antriebsstrang (24) gekoppelt ist und ausgebildet ist, das Fahrzeug (26) alleine oder in Verbindung mit der Elektromaschine (2) anzutreiben.

13. Verfahren zum Steuern einer Elektromaschine (2) mit einem Stator (3) und einem Rotor (4), aufweisend:
Erfassen (S1) einer Temperatur (6-1) des Stators (3) und einer Temperatur (6-2) des Rotors (4); und **gekennzeichnet durch** Einstellen (S2) eines Arbeitspunkts (8) der Elektromaschine (2) basierend auf einer Drehmomentvorgabe (9) und der erfassten Temperatur (6-1) des Stators (3) und der erfassten Temperatur (6-2) des Rotors (4) und einer vorgegebenen Verteilung (10) für die thermische Belastung des Stators (3) und des Rotors (4).

14. Verfahren nach Anspruch 13,
wobei das Einstellen des Arbeitspunkts (8) durch Berechnen einer d-Achsenkomponente (11) eines Stromvektors (13-1 - 13-3) und einer q-Achsenkomponente (12) des Stromvektors (13-1 - 13-3) in einem feldorientierten Koordinatensystem erfolgt.

15. Verfahren nach Anspruch 14,
wobei beim Einstellen die d-Achsenkomponente (11) des Stromvektors (13-1 - 13-3) gegenüber der q-Achsenkomponente (12) des Stromvektors (13-1 - 13-3), insbesondere basierend auf einem Kennlinienfeld (15), welches für vorgegebene Werte der d-Achsenkomponente (11) und der q-Achsenkomponente (12) des Stromvektors (13-1 - 13-3) das resultierende Drehmoment (17) und insbesondere denn resultierenden Motorstrom (16) und/oder den resultierenden magnetischen Fluss in der Elektromaschine (2) angibt, vergrößert wird und/oder wobei die q-Achsenkomponente (12) des Stromvektors (13-1 - 13-3) gegenüber der d-Achsenkomponente (11) des Stromvektors (13-1 - 13-3), insbesondere basierend auf dem Kennlinienfeld (15), verringert wird, wenn die thermische Belastung des Rotors (4) gegenüber der thermischen Belastung des Stators (3) verringert werden soll; und/oder
wobei beim Einstellen der Betrag des Stromvektors (13-1 - 13-3) verringert wird, wenn die thermische Belastung des Stators (3) verringert werden soll.

## Claims

1. Control device (1) for an electric machine (2) including a stator (3) and a rotor (4), including
a temperature detection device (5) which is designed to detect the temperature (6-1) of the stator (3) and the temperature (6-2) of the rotor (4); **characterized by** a computing device (7) which is designed to set the operating point (8) of the electric machine (2) based on a torque specification (9) and the detected temperature (6-1) of the stator (3) and the detected temperature (6-2) of the rotor (4) and a predefined distribution (10) for the thermal load of the stator (3) and the rotor (4).

2. Control device according to Claim 1,
wherein the computing device (7) is designed to set the operating point (8) by calculating a d-axis component (11) of a current vector (13-1 to 13-3) and a q-axis component (12) of the current vector (13-1 to 13-3) in a field-oriented coordinate system.

3. Control device according to Claim 2,
including a memory (14) which is designed to store a machine-specific characteristic curve field (15) for the electric machine (2), which specifies the resulting motor current (16) and the resulting torque (17) and the resulting magnetic flux (30) in the electric machine (2) for predefined values of the d-axis component (11) and the q-axis component (12) of the current vector (13-1 to 13-3).

4. Control device according to one of Claims 2 and 3,
wherein the computing device (7) is designed, in particular based on the characteristic curve field (15), to increase and/or to decrease the d-axis component (11) of the current vector (13-1 to 13-3) with respect to the q-axis component (12) of the current vector (13-1 to 13-3), and to adjust the q-axis component (12) of the current vector (13-1 to 13-3) in such a way that the torque predefined by the torque specification (9) is reached in the electric machine (2) if the thermal load of the rotor (4) is to be decreased with respect to the thermal load of the stator (3);
wherein the computing device (7), in particular if the electric machine (2) is designed as a permanently excited synchronous machine (7), is designed to increase the d-axis component (11) of the current vector (13-1 to 13-3), in particular based on the characteristic curve field (15), with respect to the q-axis component (12) of the current vector (13-1 to 13-3), and/or to decrease the q-axis component (12) of the current vector (13-1 to 13-3) with respect to the d-axis component (11) of the current vector (13-1 to 13-3), in particular based on the characteristic curve field (15), if the thermal load of the rotor (4) is to be decreased with respect to the thermal load of the stator (3).

5. Control device according to Claim 4,
wherein the computing device (7) is designed to increase the d-axis component (11) of the current vector (13-1 to 13-3), in particular based on the characteristic curve field (15), and to decreased the q-axis component (12) of the current vector (13-1 to 13-3), so that the resulting current vector (13-1 to 13-3) is shifted to a characteristic curve having a constant torque (17).

6. Control device according to one of the preceding Claims 2 to 5,
wherein the computing device (7) is designed to decrease the magnitude of the current vector (13-1 to 13-3) if the thermal load of the stator (3) is to be decreased.

7. Control device according to one of the preceding Claims 1 to 6,
wherein the computing device (7) is designed to calculate the operating point (8) furthermore based on an intermediate circuit voltage (18) of the control device (1) and/or a stator frequency (19).

8. Control device according to one of the preceding claims,
wherein the temperature detection device (5) is designed to calculate the temperature (6-1) of the stator (3) and/or the temperature (6-2) of the rotor (4), in particular in a model-based manner; and/or
wherein the temperature detection device (5) includes at least one temperature sensor (20) for detecting the temperature (6-1) of the stator (3) and/or the temperature (6-2) of the rotor (4).

9. Control device according to one of the preceding claims,
including a current controller (21) which is coupled to the computing device (7) and is designed to calculate control voltages (22-1 to 22-3) for the phases (23-1 to 23-3) of the electric machine (2) based on the operating point (8) set by the computing device (7).

10. Vehicle (26)
including an electric machine (2) which includes a stator (3) and a rotor (4); and
including a control device (1) according to one of the preceding claims, which is coupled to the electric machine (2) and is designed to control the electric machine (2).

11. Vehicle according to Claim 10,
wherein the electric machine (2) is coupled to a drive train (24) of the vehicle (26) and is designed to drive the vehicle (26).

12. Vehicle according to Claim 11,
including an internal combustion engine (25) which is mechanically coupled to the drive train (24) and is designed to drive the vehicle (26) alone or in connection with the electric machine (2).

13. Method for controlling an electric machine (2) including a stator (3) and a rotor (4), including:
detecting (S1) a temperature (6-1) of the stator (3) and a temperature (6-2) of the rotor (4); and **characterized by**
setting (S2) an operating point (8) of the electric machine (2) based on a torque specification (9) and the detected temperature (6-1) of the stator (3) and the detected temperature (6-2) of the rotor (4) and a predefined distribution (10) for the thermal load of the stator (3) and the rotor (4).

14. Method according to Claim 13,
wherein the setting of the operating point (8) takes place by calculating a d-axis component (11) of a current vector (13-1 to 13-3) and a q-axis component (12) of the current vector (13-1 to 13-3) in a field-oriented coordinate system.

15. Method according to Claim 14,
wherein when setting, the d-axis component (11) of the current vector (13-1 to 13-3) is increased with respect to the q-axis component (12) of the current vector (13-1 to 13-3), in particular based on a characteristic curve field (15) which specifies the resulting torque (17) and in particular the resulting motor current (16) and/or the resulting magnetic flux in the electric machine (2) for predefined values of the d-axis component (11) and the q-axis component (12) of the current vector (13-1 to 13-3), and/or wherein the q-axis component (12) of the current vector (13-1 to 13-3) is decreased with respect to the d-axis component (11) of the current vector (13-1 to 13-3), in particular based on the characteristic curve field (15), if the thermal load of the rotor (4) is to be decreased with respect to the thermal load of the stator (3); and/or
wherein when setting, the magnitude of the current vector (13-1 to 13-3) is decreased if the thermal load of the stator (3) is to be decreased.

## Revendications

1. Dispositif de commande (1) pour une machine électrique (2) pourvue d'un stator (3) et d'un rotor (4), lequel dispositif comprend un dispositif de détection de température (5) conçu pour détecter la température (6-1) du stator (3) et la température (6-2) du rotor (4) ;
**caractérisé par** un système de calcul (7) conçu pour régler le point de fonctionnement (8) de la machine électrique (2) sur la base d'une consigne de couple (9), de la température détectée (6-1) du stator (3), de la température détectée (6-2) du rotor (4) et d'une répartition prédéterminée (10) de la charge thermique du stator (3) et du rotor (4).

2. Dispositif de commande selon la revendication 1,
dans lequel le système de calcul (7) est conçu pour régler le point de fonctionnement (8) en calculant une composante d'axe d (11) d'un vecteur de courant (13-1 - 13-3) et une composante d'axe q (12) du vecteur de courant (13-1 - 13-3) dans un système de coordonnées orienté suivant le champ.

3. Dispositif de commande selon la revendication 2, comprenant une mémoire (14) conçue pour stocker, pour la machine électrique (2), un diagramme de courbes caractéristiques (15) spécifique de la machine (2) qui indique, pour des valeurs prédéterminées de la composante d'axe d (11) et de la composante d'axe q (12) du vecteur de courant (13-1 - 13-3), le courant de moteur résultant (16), le couple résultant (17) et le flux magnétique résultant (30) dans la machine électrique (2).

4. Dispositif de commande selon l'une des revendications 2 et 3,
dans lequel le système de calcul (7) est conçu, en particulier sur la base du diagramme de courbes caractéristiques (15), pour augmenter et/ou réduire la composante d'axe d (11) du vecteur de courant (13-1 - 13-3) par rapport à la composante d'axe q (12) du vecteur de courant (13-1 - 13-3) et pour adapter la composante d'axe q (12) du vecteur de courant (13-1 - 13-3) de manière à ce que le couple prédéterminé par la consigne de couple (9) soit réglé dans la machine électrique (2) lorsque la charge thermique du rotor (4) doit être réduite par rapport à la charge thermique du stator (3) ;
dans lequel le système de calcul (7), en particulier lorsque la machine électrique (2) est réalisée sous la forme d'une machine synchrone (7) excitée en permanence, est conçu pour augmenter la composante d'axe d (11) du vecteur de courant (13-1 - 13-3), en particulier sur la base du diagramme de courbes caractéristiques (15), par rapport à la composante d'axe q (12) du vecteur de courant (13-1 - 13-3) et/ou pour réduire la composante d'axe q (12) du vecteur de courant (13-1 - 13-3), en particulier sur la base du diagramme de courbes caractéristiques (15), par rapport à la composante d'axe d (11) du vecteur de courant (13-1 - 13-3) lorsque la charge thermique du rotor (4) doit être réduite par rapport à la charge thermique du stator (3).

5. Dispositif de commande selon la revendication 4,
dans lequel le système de calcul (7) est conçu pour augmenter la composante d'axe d (11) du vecteur de courant (13-1 - 13-3), en particulier sur la base du diagramme de courbes caractéristiques (15), et pour réduire la composante d'axe q (12) du vecteur de courant (13-1 - 13-3) de manière à ce que le vecteur de courant résultant (13-1 - 13-3) soit déplacé suivant une courbe caractéristique de couple constant (17).

6. Dispositif de commande selon l'une des revendications précédentes 2 à 5,
dans lequel le système de calcul (7) est conçu pour réduire la valeur du vecteur de courant (13-1 - 13-3) lorsque la charge thermique du stator (3) doit être réduite.

7. Dispositif de commande selon l'une des revendications 1 à 6 précédentes,
dans lequel le système de calcul (7) est conçu pour calculer en outre le point de fonctionnement (8) sur la base d'une tension de circuit intermédiaire (18) du dispositif de commande (1) et/ou d'une fréquence de stator (19).

8. Dispositif de commande selon l'une des revendications précédentes,
dans lequel le dispositif de détection de température (5) est conçu pour calculer la température (6-1) du stator (3) et/ou la température (6-2) du rotor (4), en particulier sur la base de modèles ; et/ou
dans lequel le dispositif de détection de température (5) comporte au moins un capteur de température (20) pour détecter la température (6-1) du stator (3) et/ou la température (6-2) du rotor (4).

9. Dispositif de commande selon l'une des revendications précédentes,
comprenant un régulateur de courant (21) couplé au système de calcul (7) et destiné à calculer des tensions de commande (22-1 - 22-3) pour les phases (23-1 - 23-3) de la machine électrique (2) sur la base du point de fonctionnement (8) réglé par le système de calcul (7).

10. Véhicule (26)
comprenant une machine électrique (2) qui comporte un stator (3) et un rotor (4) ; et
comprenant un dispositif de commande (1) selon l'une des revendications précédentes, qui est couplé à la machine électrique (2) et est conçu pour commander la machine électrique (2).

11. Véhicule selon la revendication 10,
dans lequel la machine électrique (2) est couplée à une chaîne cinématique (24) du véhicule (26) et est conçue pour entraîner le véhicule (26).

12. Véhicule selon la revendication 11,
comprenant un moteur à combustion interne (25) qui est couplé mécaniquement à la chaîne cinématique (24) et qui est conçu pour entraîner le véhicule (26) seul ou en association avec la machine électrique (2).

13. Procédé de commande d'une machine électrique (2) pourvue d'un stator (3) et d'un rotor (4), comprenant :
la détection (S1) d'une température (6-1) du stator (3) et d'une température (6-2) du rotor (4) ; et **caractérisé par**
le réglage (S2) d'un point de fonctionnement (8) de la machine électrique (2) sur la base d'une consigne de couple (9), de la température détectée (6-1) du stator (3), de la température détectée (6-2) du rotor (4) et d'une répartition prédéterminée (10) de la charge thermique du stator (3) et du rotor (4).

14. Procédé selon la revendication 13,
dans lequel le réglage du point de fonctionnement (8) s'effectue en calculant une composante d'axe d (11) d'un vecteur de courant (13-1 - 13-3) et une composante d'axe q (12) du vecteur de courant (13-1 - 13-3) dans un système de coordonnées orienté suivant le champ.

15. Procédé selon la revendication 14,
dans lequel, lors du réglage, la composante d'axe d (11) du vecteur de courant (13-1 - 13-3) est augmentée par rapport à la composante d'axe q (12) du vecteur de courant (13-1 - 13-3), en particulier sur la base d'un diagramme de courbes caractéristique (15) qui, pour des valeurs prédéterminées de la composante d'axe d (11) et de la composante d'axe q (12) du vecteur de courant (13-1 -13- 3), indique le couple résultant (17) et en particulier le courant de moteur résultant (16) et/ou le flux magnétique résultant dans la machine électrique (2), et/ou dans lequel la composante d'axe q (12) du vecteur de courant (13-1 - 13-3) est réduite par rapport à la composante d'axe d (11) du vecteur de courant (13-1 - 13-3), en particulier sur la base du diagramme de courbes caractéristiques (15), lorsque la charge thermique du rotor (4) doit être réduite par rapport à la charge thermique du stator (3) ; et/ou
dans lequel, lors du réglage, la valeur du vecteur de courant (13-1 - 13-3) est réduite lorsque la charge thermique du stator (3) doit être réduite.
